Europäisches Patentamt

European Patent Office

Office européen des brevets

(19)

(11) EP 0 573 364 B1

(12) FASCICULE DE BREVET EUROPEEN

(45) Date de publication et mention
de la délivrance du brevet:
**27.10.1999 Bulletin 1999/43**

(51) Int Cl.6: **G06T 11/00**

(21) Numéro de dépôt: **93401423.4**

(22) Date de dépôt: **03.06.1993**

(54) **Procédé de reconstruction d'images tridimensionnelles d'un objet par des mesures utilisant un rayonnement conique et un réseau bidimensionnel de détecteurs**

Verfahren zur Bilderzeugung eines Objektes durch Strahlung einer konischen Quelle und einer zweidimensionalen Detektoranordnung

Method for the reconstruction of 3D images of an object from measures using a cone beam source and a two dimensional detector array

(84) Etats contractants désignés:
**DE GB NL**

(30) Priorité: **05.06.1992 FR 9206844**

(43) Date de publication de la demande:
**08.12.1993 Bulletin 1993/49**

(73) Titulaire: **COMMISSARIAT A L'ENERGIE ATOMIQUE**
**75015 Paris (FR)**

(72) Inventeurs:
• **Grangeat, Pierre**
  **F-38330 Saint Ismier (FR)**
• **Guillemaud, Régis**
  **F-38000 Grenoble (FR)**
• **Rizo, Philippe**
  **F-38700 La Tronche (FR)**

(74) Mandataire: **Ilgart, Jean-Christophe et al**
**c/o Société Brevatome,**
**25, rue de Ponthieu**
**F-75008 Paris (FR)**

(56) Documents cités:
• **JOURNAL OF THE OPTICAL SOCIETY OF AMERICA A (OPTICS AND IMAGE SCIENCE) vol. 8, no. 10, Octobre 1991, pages 1639 - 1648 RIZO ET AL. 'Comparison of two three-dimensional x-ray cone-beam reconstruction algorithms with circular source trajectories'**
• **TREZI ME COLLOQUE SUR LE TRAITEMENT DU SIGNAL ET DES IMAGES 16 Septembre 1991, JUAN-LES-PINS.FRANCE pages 817 - 820 , XP242901 GRANGEAT ET AL 'Recentes evolutions de la tomographie 3D en geometrie conique'**
• **OPTICAL ENGINEERING vol. 29, no. 5, Mai 1990, BELLINGHAM,WA,USA pages 524 - 534 , XP127718 SMITH 'Cone-beam tomography : recent advances and tutorial review'**
• **IEEE.TRANSACTION ON MEDICAL IMAGING vol. 11, no. 1, Mars 1992, NEW YORK,USA pages 111 - 116 , XP281931 CONCEPCION ET AL. 'CT fan beam reconstruction wirh nonstationary axis of rotation'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention se rapporte à un procédé de reconstruction d'images tridimensionnelles d'un objet à l'aide de mesures utilisant un rayonnement conique et un réseau bidimensionnel de détecteurs.

Elle peut être considérée comme un perfectionnement des inventions décrites dans les brevets précédents attribués à la demanderesse (brevet européen 0292402 et brevets français de numéros d'enregistrement 90 14957 et 90 14958).

Un procédé de reconstruction de l'image d'un objet tridimensionnel à partir d'une série d'irradiations par un faisceau conique tournant autour de l'objet et qui vient frapper un écran couvert d'un réseau bidimensionnel de détecteurs est plus précisément décrit dans le premier de ces brevets : un algorithme utilisant l'inversion de ce qu'on appelle la dérivée première de la transformée de Radon de l'atténuation du rayonnement du faisceau à travers l'objet à reconstituer est utilisé.

Un article illustrant certains aspects de la reconstruction d'images tridimensionnelles avec l'emploi d'un faisceau conique d'irradiation est « Comparison of two three-dimensional X-ray cone-beam-reconstruction algorithms with circular source trajectories », par Rizo et al., paru dans « Journal of the Optical Society of America A » (Optics and Image Science), vol.8, n°10, oct.1991, USA, p.1639-1648: les méthodes par rétro-projection directe et par inversion de la transformé de Radon sont comparées, et les causes d'apparition d'artifacts dans les résultats sont examinées.

Les calculs exposés là ne sont cependant plus valables quand le réseau de détecteurs est mal placé par rapport à la trajectoire, ou quand le point focal est déplacé de sa position théorique, car la ligne de projection orthogonale du point focal sur le réseau de détecteurs (l'axe focal) ne passe plus par l'origine du repère d'objet. Une grande partie des calculs est en effet faite dans ce repère, qui est choisi sur l'axe de rotation du point focal et du réseau de détecteurs quand ceux-ci parcourent des trajectoires circulaires et dans le plan des trajectoires quand celles-ci sont coplanaires. Or ces situations sont extrêmement fréquentes car elles peuvent provenir de défauts d'alignement et de positionnement des mécanismes porteurs de la source et de l'écran, défauts qu'on n'a pas toujours le loisir de pouvoir corriger.

Parfois ces situations sont même volontairement recherchées : un exemple classique est celui de l'examen de l'intérieur du crâne où le réseau de détecteurs parcourt une trajectoire située sur un cercle dont l'axe est parallèle à l'axe du patient.

On désire utiliser l'appareil pour examiner des régions internes à des hauteurs différentes. Pour des raisons de coût et de simplicité, il est avantageux de pourvoir le réseau de détecteurs d'un collimateur unique pour toutes les situations d'examen.

Or, les distorsions de la fonction de transfert de modulation qui accompagne les mesures et la reconstruction, et donc les distorsions de l'image, sont moins grandes dans le plan de la trajectoire du point focal, ce qui explique qu'on cherche à faire couper la région à examiner par ce plan.

On est alors amené à vouloir régler l'inclinaison du réseau de détecteurs sur le crâne du patient, en le disposant obliquement de façon que le point focal suive une trajectoire circulaire dont la hauteur est réglée en conséquence. De plus les détecteurs suivent ainsi au niveau des épaules des trajectoires de plus grand diamètre que ceux qui sont au niveau du sommet du crâne, ce qui permet d'enfoncer la tête plus profondément dans le dispositif et ainsi d'abaisser le plan de la trajectoire du point focal en direction du cou. Si le point focal correspond à une source matérielle de rayonnement, il suffit de la relier au réseau de détecteurs par une connexion mécanique rigide.

Les calculs de reconstruction des images sont sensiblement plus compliqués dans ces conditions géométriques plus générales. Certaines publications les mentionnent ou les évoquent, au moins dans certains cas particuliers. Il est ainsi décrit comment procéder quand la reconstruction est effectuée par l'algorithme de Feldkamp dans lequel le faisceau conique est décomposé en un empilement de faisceaux plans en forme d'éventail (article de Manglos, Jaszczak et Greer "Cone-beam SPECT reconstruction with camera tilt", paru en 1989 dans "Physics in Medicine and Biology", n°34(5), p.625 et abrégé de Cao et Tsui paru en 1991 dans le "Journal of Nuclear Medicine", n°32(5), p.1066) ou par un algorithme de calcul itératif dans lequel la contribution de chaque point à l'atténuation du rayonnement est calculée à partir d'une valeur initiale en calculant à chaque étape des facteurs de correction déduits du rapport entre les mesures et les projections de l'estimation de la fonction obtenue à l'étape précédente (article de Manglos, Jaszczak et Mac Afee "Maximum likelihood reconstruction for cone-beam SPECT with camera tilt" paru en 1989 dans "IEEE Transactions on Nuclear Science", n°36(1). p.1117), mais rien ne semble avoir été effectué dans le cas où l'algorithme implique l'inversion de la transformée de Radon de la fonction ou de sa dérivée première.

L'invention comble cette lacune, aussi bien dans le cas évoqué jusqu'à présent d'un faisceau conique émis d'une source ponctuelle externe et qui traverse l'objet en étant atténué que dans le cas parfaitement équivalent d'un réseau bidimensionnel de détecteurs collimatés vers un point focal unique derrière l'objet et sensible au rayonnement d'un produit émetteur de rayonnement qui imprègne l'objet, comme un marqueur contenu dans un liquide injecté au patient et qui se répand dans un organe à explorer après avoir été transporté par le réseau veineux. Il faut aussi observer que l'invention peut s'appliquer à un nombre quelconque de réseaux de détecteurs qui contribuent chacun à une partie de mesure et sont déplacés de quantités différentes.

L'invention concerne donc sous sa forme la plus générale un procédé de reconstruction d'images tridimensionnelles d'un objet défini par des valeurs prises par une fonction sur des points de l'objet, la fonction étant une propriété d'un rayonnement conique ayant un point focal et passant à travers l'objet, dans lequel la fonction est calculée par l'intermédiaire de sommes de la fonction sur des plans paramétrés passant par au moins un point de l'objet et définis dans un repère d'objet comportant une origine, le procédé comportant au moins une série de mesures prises dans différentes positions du point focal autour de l'objet, chaque somme de la fonction sur lesdits plans paramétrés dans le repère d'objet étant calculée à partir d'au moins une des mesures, chacune des mesures étant menée avec un réseau bidimensionnel de détecteurs du rayonnement orientés vers le point focal, et qui est déplacé sur une trajectoire circulaire autour de l'objet perpendiculairement à un axe de rotation, le point focal étant déplacé en même temps que le réseau de détecteurs de manière à se projeter orthogonalement sur un point fixe du réseau des détecteurs, un algorithme d'inversion étant utilisé pour retrouver la valeur prise par la fonction sur les points de l'objet à l'aide des sommes de la fonction sur les plans paramétrés, l'algorithme comprenant des étapes de détermination d'au moins une position du point focal appartenant à chacun desdits plans paramétrés, caractérisé en ce que l'axe focal, défini comme la ligne de projection orthogonale du point focal sur le réseau, passe à l'écart de l'origine et en ce que les étapes de détermination comprennent des calculs où interviennent des paramètres exprimant l'écart entre l'axe focal et l'origine et l'inclinaison entre l'axe focal et l'axe de rotation, cette inclinaison pouvant être quelconque.

La géométrie d'acquisition est décrite d'une part par un jeu de paramètres intrinsèques à savoir la distance focale FGd, la position Gd de la projection orthogonale du point focal F sur le réseau de détecteurs, les pas d'échantillonnage séparant les détecteurs sur le réseau, et d'autre part par un jeu de paramètres extrinsèques servant à positionner le point focal et le réseau de détecteurs considérés par rapport à l'axe de rotation, à savoir la position du point Od projection conique de l'origine 0 sur le réseau de détecteurs, la distance FG séparant le point focal et le plan parallèle au détecteur et contenant l'origine 0 du repère d'objet, l'inclinaison du vecteur perpendiculaire aux détecteurs par rapport à l'axe de rotation, l'angle de rotation des lignes du réseau de détecteur par rapport à la droite d'intersection du plan de rotation du point focal avec le détecteur, la position angulaire de la première acquisition.

On va maintenant décrire l'invention plus en détail à l'aide des figures suivantes annexées à titre illustratif et non limitatif :

- la figure 1 représente un exemple d'utilisation de l'invention ;

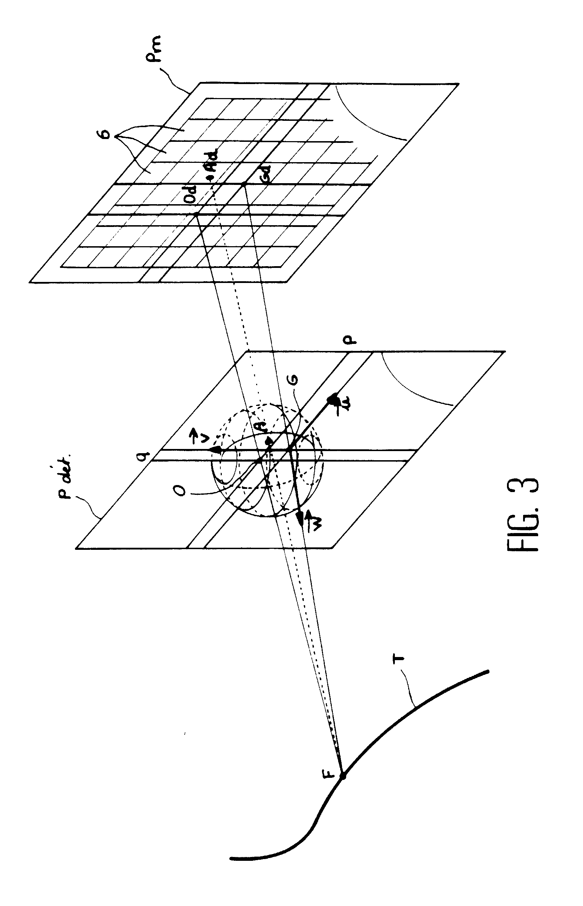

- et les figures 2 à 7 représentent les éléments géométriques mis en oeuvre et commentés dans la suite du texte.

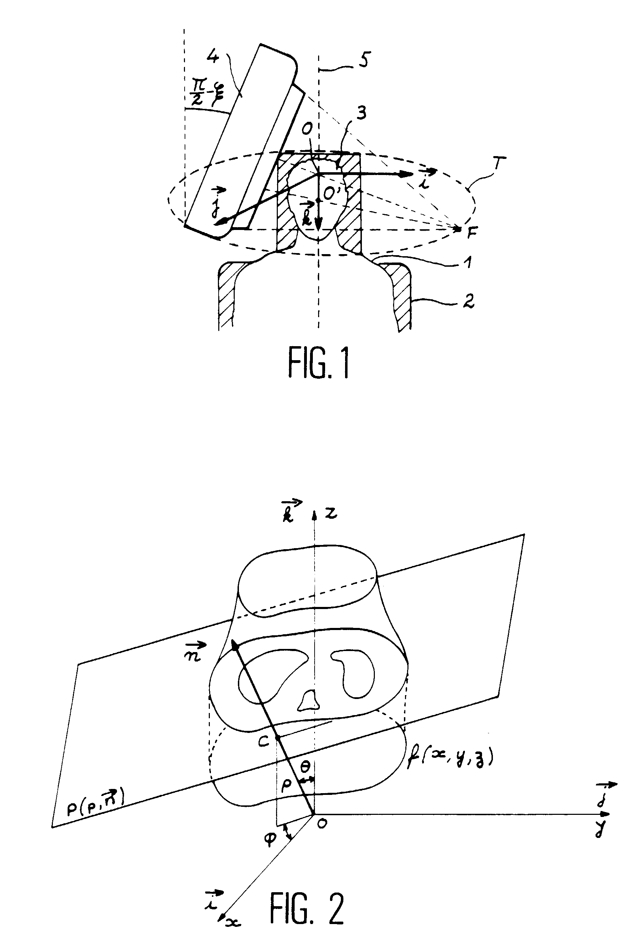

La figure 1 représente donc un patient 1 étendu sur une table 2 et dont la tête 3 est examinée à l'aide d'une camera 4 de rayons gamma, qui tourne autour de la tête 3 selon un axe de rotation 5 établi dans le sens de la hauteur du patient. La caméra 4 est formée essentiellement d'un réseau plan (ou plus généralement bidimensionnel) de détecteurs collimatés de manière que les rayonnements qu'ils reçoivent convergent tous vers un point focal F. Elle est fixée à une structure mécanique circulaire non représentée - mais dont les brevets cités fournissent des exemples - de façon que le point focal F est solidaire de la caméra 4 et parcourt une trajectoire T en forme d'orbite circulaire perpendiculaire à l'axe de rotation 5 et dont le centre O' appartient à cet axe. La trajectoire T s'étend ici à hauteur du cerveau du patient 1. La caméra est inclinée d'un angle $(\frac{\pi}{2} - \xi)$ par rapport à l'axe de rotation 5 ; l'angle $\xi$ sera défini plus précisément d'ici peu. Il est supposé égal à $\frac{\pi}{2}$ dans les brevets antérieurs ; l'appareillage associé à cette invention est de préférence constitué de façon à permettre de modifier l'angle $\xi$ à volonté pour déplacer la trajectoire T et la placer à hauteur de la région de la tête 3 pour laquelle on manifeste de l'intérêt, car une plus grande netteté est obtenue à hauteur de cette trajectoire T.

Les points de l'image du patient sont définis par leurs coordonnées dans un repère d'objet qui est un repère cartésien d'origine 0 placé sur l'axe de rotation 5 et défini par trois vecteurs directeurs : le vecteur $\vec{i}$ orienté vers la gauche du patient 1, le vecteur $\vec{j}$ orienté vers l'avant et le vecteur $\vec{k}$ orienté vers le bas et colinéaire à l'axe de rotation 5. Le but de l'invention est de perfectionner des algorithmes existants de reconstruction de l'image à partir des vues prises par la caméra 4 pour les rendre utilisables dans ce cas général. Les relations géométriques (angles et distances) entre les deux séries d'éléments sont supposées connues par une mesure antérieure du type de celle présentée dans la suite du brevet, quelle que soit leur origine, défaut de construction de la caméra 4 ou de son mécanisme de support ou résultat d'un choix volontaire de l'inclinaison de l'axe focal du réseau de détecteurs. On ne tiendra pas compte dans cet exposé des phénomènes parasites tels que l'auto-atténuation du rayonnement à l'intérieur de l'organisme examiné.

Nous nous plaçons dans le cadre des méthodes analytiques. La cartographie de l'activité d'atténuation ou d'émission est décrite par une fonction tridimensionnelle f représentant un ensemble de coupes transverses parallèles. Pour chaque position du point focal F, chaque détecteur 6 est relié au point focal F par une droite de projection unique. La projection en géométrie conique Xf associe à chacune de ces droites une intégrale de la fonction f. La reconstruction revient à résoudre le problème inverse, c'est-à-dire à mettre en oeuvre l'enchaînement des transformations nécessaires pour calculer f à partir de Xf. L'outil d'analyse est la transformation de Radon 3D, définie comme l'ensemble des valeurs intégrales sur les plans de l'espace, Dans la pratique, on se restreint aux plans qui rencontrent l'objet. On associe à chaque plan P son point caractéristique C, projection orthogonale de l'origine O sur ce plan, et les coordonnées sphériques ($\rho$, $\vec{n}$) de ce point C.

Le point C, défini par ses coordonnées x, y et z dans le repère d'objet ($\overrightarrow{OC}=x\vec{i}+y\vec{j}+z\vec{k}$), peut également être défini en coordonnées sphériques par la relation $\overrightarrow{OC}= \rho\vec{n}$ où $\vec{n}$ est un vecteur unitaire et $\rho$ un rayon. Il faut alors introduire les coordonnées telles que la longitude $\varphi$ et la colatitude $\theta$ pour définir l'orientation du vecteur $\vec{n}$.

Pour une position donnée du point focal F et pour un plan passant par ce point, nous avons établi une formule exacte, reliant la projection en géométrie conique Xf, à la dérivée première de la transformée de Radon R'f. L'opération principale consiste à sommer le long de la droite d'intersection du plan avec le détecteur les dérivées premières de la projection. Ceci permet d'affecter une valeur à tous les plans passant par cette position du plan focal. Après avoir procédé ainsi pour chaque incidence de mesure, l'opération de réarrangement consiste à redistribuer ces valeurs intégrales associées à chaque plan, du système de coordonnées lié aux positions du point focal, sur le système de coordonnées sphériques du domaine de Radon. Pour retrouver la fonction f, il reste à inverser la dérivée première de la transformée de Radon comme il est décrit dans le brevet mentionné en premier. L'algorithme procède en deux étapes, enchaînant d'abord des rétroprojections bidimensionnelles en géométrie parallèle pour chaque méridien du domaine de Radon, puis des rétroprojections bidimensionnelles en géométrie parallèle suivant les plans axiaux de l'objet.

La trajectoire du point focal est usuellement circulaire. En caractérisant l'information acquise par les plans rencontrant la trajectoire, notre analyse met en évidence l'existence d'une zone d'ombre dans le domaine de Radon, liée aux plans qui rencontrent l'objet mais pas la trajectoire. Cette zone d'ombre est une source d'artefacts sur l'image reconstruite. Ceci explique pourquoi il est souhaitable que le plan focal soit centré sur la région à reconstruire. Notre algorithme permet d'atténuer ces distorsions en comblant cette zone d'ombre par interpolation.

Pour simplifier les calculs, on effectue un paramétrage sur un plan de détection Pdèt, parallèle au plan des détecteurs Pm auquel les détecteurs 6 appartiennent, et qui passe par l'origine 0. Les calculs menés sur le plan de détection Pdét sont valables quelle que soit la distance du plan des détecteurs Pm, à un facteur de grossissement près. On désigne par A un point quelconque du plan de détection Pdét, par G la projection orthogonale du point focal F sur le plan de détection Pdét, et par Od, Ad, Gd les points du plan des détecteurs Pm tels que F,O et Od, d'une part, F,A et Ad ensuite, et F,G et Gd d'autre part soient alignés ; mais dans le cas présent, G et O sont distincts contrairement aux brevets précédents. Les calculs menés sur le plan des détecteurs Pm ou, de manière équivalente, sur le plan de détection Pdét utilisent un repère d'origine 0 dont deux vecteurs $\vec{u}$ et $\vec{v}$ sont disposés parallèlement aux deux directions principales (lignes et colonnes) du réseau de détecteur 6 et dont le troisième $\vec{w}$ est dirigé vers le point focal F dans une direction perpendiculaire. Ce repère est nommé le repère d'acquisition.

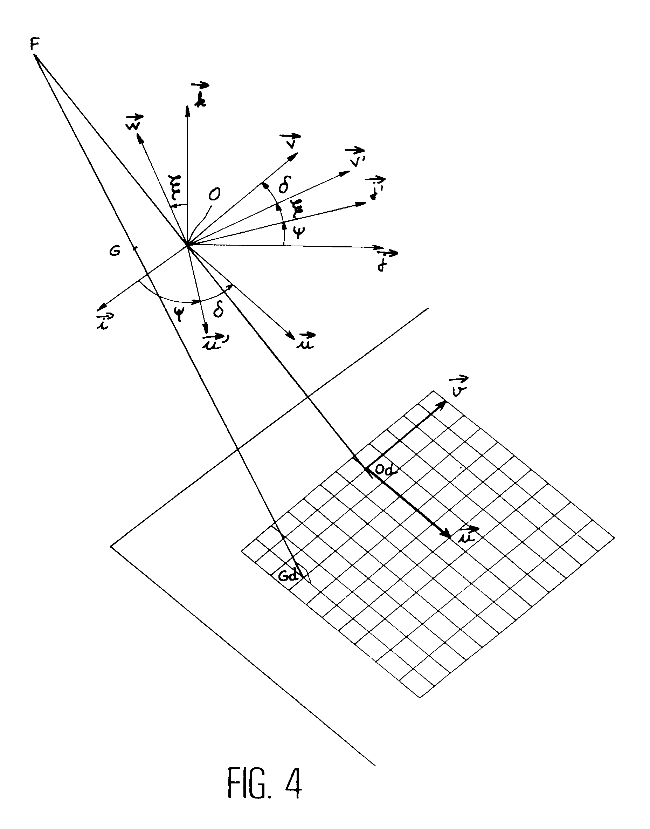

Trois angles de rotation peuvent être définis (figure 4) pour décrire la position respective des repères d'objet et d'acquisition. L'angle de précession $\psi$ autour de l'axe $\overrightarrow{Ok}$ transforme le repère $\overrightarrow{Oij}\vec{k}$ en un repère intermédiaire $\overrightarrow{Ou'j'}\vec{k}$. Il est associé à la rotation de la caméra 4 et du point focal F sur la trajectoire T.

L'angle de nutation $\xi$ fait passer du repère $\overrightarrow{Ou'j'}\vec{k}$ au repère $\overrightarrow{Ou'v'}\vec{w}$ et est donc une rotation autour de l'axe défini par le vecteur $\vec{u}'$ ; il exprime l'inclinaison de la caméra 4 par rapport à l'axe de rotation 5.

L'angle de rotation propre $\delta$ est une rotation autour de l'axe défini par le vecteur $\vec{w}$ et l'origine 0 et qui fait passer du repère $\overrightarrow{Ou'v'}\vec{w}$ au repère $\overrightarrow{Ouv}\vec{w}$ ; il exprime l'inclinaison des lignes des détecteurs 6 de la caméra 4 par rapport à l'intersection du plan de la trajectoire T avec le détecteur.

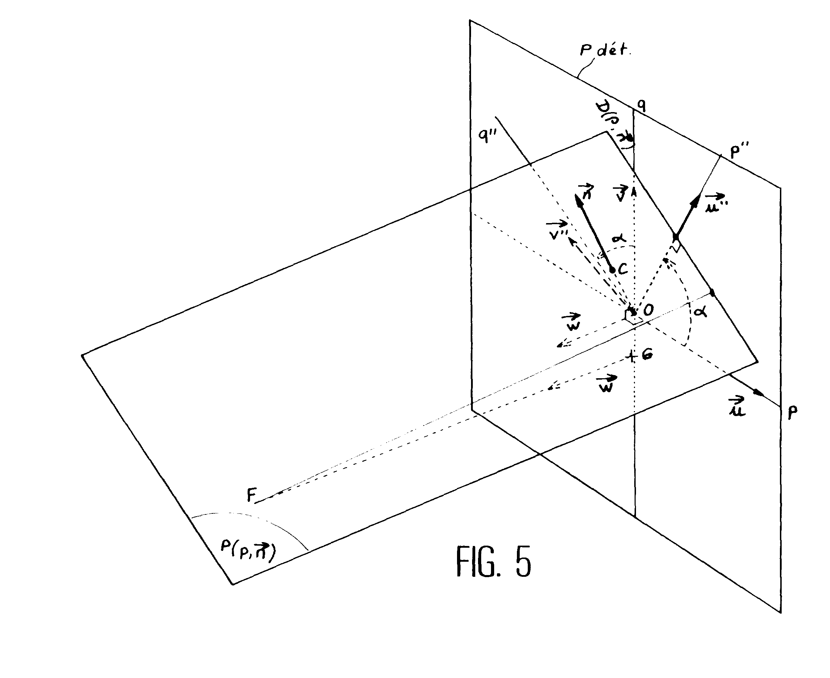

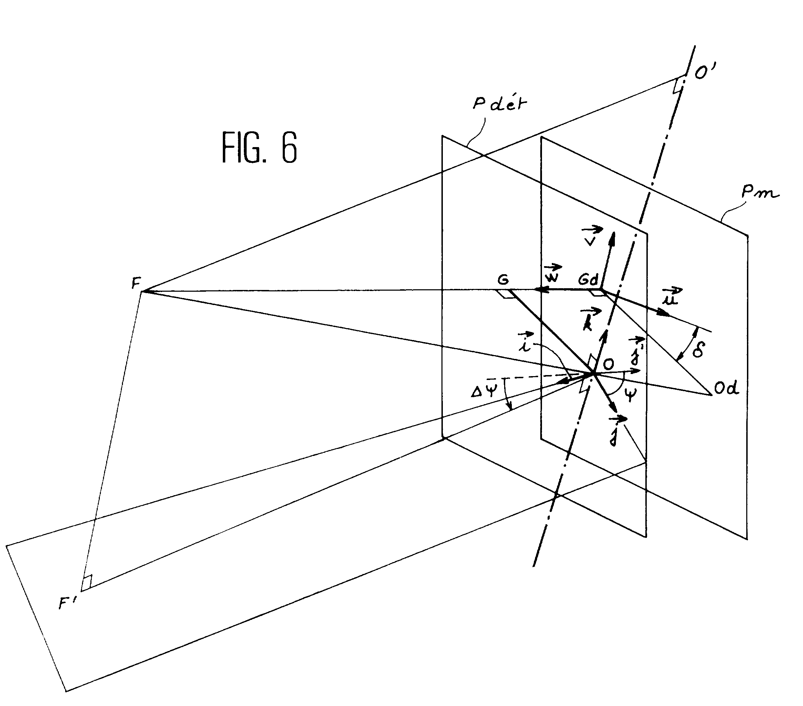

Une connaissance précise de $\delta$ et surtout de $\xi$ est nécessaire pour éviter les imprécisions de calcul pendant la reconstruction. La connaissance exacte de $\psi$ est utile pour connaître avec précision la position exacte de l'image par rapport à l'objet, mais les imprécisions sur cet angle n'ont pour conséquence qu'une erreur d'orientation de l'image reconstruite. Les vecteurs $\vec{u}$, $\vec{v}$ et $\vec{w}$, qui sont liés à la caméra 4 et aux plans des détecteurs Pm et de détection Pdét, sont illustrés aux figures 5 et 6 : $\vec{u}$ et $\vec{v}$ appartiennent à ces plans et sont orientés respectivement en direction des lignes et des colonnes du détecteur 6, et $\vec{w}$ est orthogonal à ce plan et dirigé vers le point focal F. Le point O est l'origine des coordonnées de ce repère.

L'expression de la transformée de Radon est définie par la formule (1) :

$$\mathrm{Rf}\left(\rho . \vec{n}\right) = \iint_{M \in P(\rho, \vec{n})} \mathrm{f(M)\ dM} \qquad (1)$$

celle de sa dérivée par la formule (2) :

$$R'f\left(\rho.\vec{n}\right) = \frac{\partial Rf}{\partial \rho}\left(\rho,\vec{n}\right) \qquad (2)$$

et les expressions de leurs inversions par les formules (3) et (4) :

$$f(M) = -\frac{1}{8\,\pi^2}\cdot\int_{S^2}\frac{\partial^2 Rf}{\partial\rho^2}\left(\overrightarrow{OM}.\vec{n},\vec{n}\right)d\vec{n} \qquad (3)$$

$$f(M) = -\frac{1}{8\,\pi^2}\cdot\int_{S^2}\frac{\partial R'f}{\partial\rho}\left(\overrightarrow{OM}.\vec{n},\vec{n}\right)d\vec{n} \qquad (4)$$

La fonction qui fait l'objet de la transformée est désignée par f, la transformée elle-même par Rf, M désigne les points du repère d'objet et $S^2$ désigne l'ensemble des vecteurs unitaires $\vec{n}$ de l'espace.

Si maintenant nous appelons A un point quelconque de l'intersection d'un plan $P(\rho,\vec{n})$ et du plan de détection Pdét, et si nous appelons $\vec{u}"$ et $\vec{v}"$ les vecteurs déduits des vecteurs $\vec{u}$ et $\vec{v}$ par une rotation d'angle $\alpha$ autour du vecteur $\vec{w}$ pour que le vecteur $\vec{v}"$ soit directeur de la ligne qui constitue cette intersection, la formule (5) :

$$R'f\left(\overrightarrow{OF}.\vec{n},\vec{n}\right) = \frac{\|\overrightarrow{GF}\|^2}{\|\overrightarrow{GF}\wedge\vec{n}\|^2}\int_{q"=-\infty}^{+\infty}\frac{\partial Yf}{\partial p"}\,(S,A(q"))\,dq" \qquad (5)$$

exprime la valeur de la dérivée première de la transformée de Radon, p" et q" étant les coordonnées du point A dans le repère $\overrightarrow{Ou}"\vec{v}"$ (OA=p" $\vec{u}"$+q"$\vec{v}"$) et Yf désigne la projection Xf de la fonction mesurée sur le rayon qui mène du point focal F au point A après une pondération telle que

$$Yf\,(F,\,A) = \frac{\|\overrightarrow{FG}\|}{\|\overrightarrow{FA}\|}\cdot Xf(F,\,A)$$

Ici, O et G sont distincts, le vecteur $\overrightarrow{OF}$ est égal à $pG\vec{u}+qG\vec{v}+FG\vec{w}$, soit $(x'F)\vec{u}+(y'F)\vec{j}+(zF)\vec{k}$ Les définitions précédentes nous permettent d'obtenir le système d'équations (6) :

$$\begin{cases} x'F = \cos\delta.pG - \sin\delta.qG \\[2ex] y'F = \cos\xi.\sin\delta.pG + \cos\xi.\cos\delta.qG - \sin\xi.FG \qquad (6) \\[2ex] zF = \sin\xi.\sin\delta.pG + \sin\xi.\cos\delta.qG + \cos\xi.FG \end{cases}$$

et si $\Delta\psi$ est l'angle entre $-\vec{j}$ et $\overrightarrow{OF}$, où F' est la projection orthogonale du point focal F sur le plan défini par l'origine O et les vecteurs $\vec{i}$ et $\vec{j}$, on peut déduire assez facilement les équations (7) et (8) pour une trajectoire circulaire du point focal F, d'autres formules pouvant être déduites pour d'autres formes de la trajectoire T :

$$\begin{cases} \Psi = \varphi - \Delta\Psi + \arcsin\left[\dfrac{\rho - zF.\cos\Theta}{OF'.\sin\Theta}\right] & (7) \\[4mm] \Psi = \varphi + \pi - \Delta\Psi - \arcsin\left[\dfrac{\rho - zF.\cos\Theta}{OF'.\sin\Theta}\right] & (8 \end{cases}$$

En remarquant que C($\rho$, $\Theta$, $\varphi$) est identique à C($\rho$, -$\Theta$, $\varphi$+$\pi$), on peut se restreindre à n'utiliser que l'une d'entre ces équations, par exemple la (7).

Ces équations (7) et (8) permettent d'obtenir pour chaque point du volume caractéristique de l'objet défini par ses coordonnées sphériques $\rho$, $\theta$ et $\varphi$ les valeurs des angles de précession $\psi$ pour lesquels les mesures contenues dans le plan associé, et donc la dérivée première de la transformée de Radon en ce point peut être obtenue. Ces angles sont généralement au nombre de deux puisque les plans sont généralement sécants en deux points à une trajectoire circulaire.

Les interpolations pour déduire les positions effectives du point focal F qui vont servir au calcul - il s'agit des positions voisines de cette position obtenue par calcul en utilisant les équations (7) et (8) et pour lesquelles des mesures ont été faites - ainsi que les rétro-projections pour reconstruire l'image en des points exprimés dans le repère d'objet à partir des sommes calculées sont identiques à celles du premier brevet.

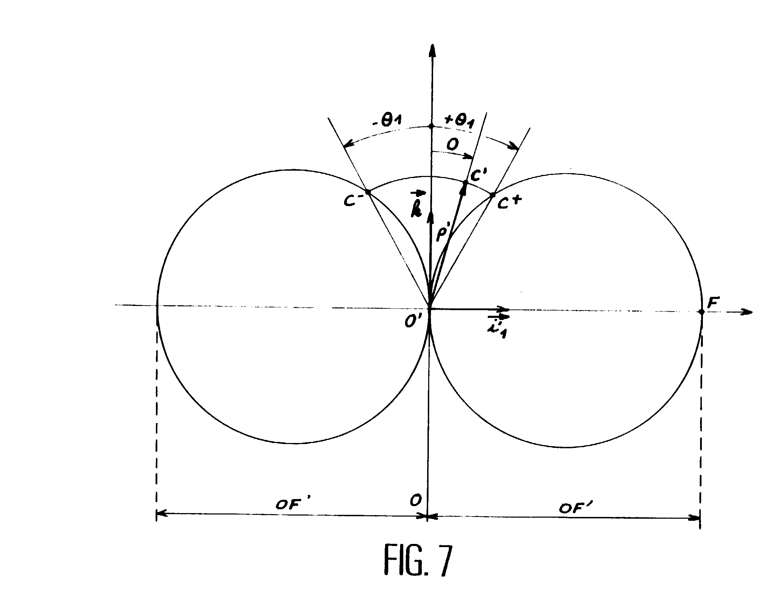

Il faut toutefois examiner comment il convient d'effectuer les interpolations pour combler la "zone d'ombre" des mesures avant d'accomplir les calculs d'inversion. On se reporte pour cela à la figure 7 : il est possible de démontrer facilement que, si la trajectoire du point focal F est un cercle, les points caractéristiques C' associés à des plans sur lesquels la somme de la fonction f peut être mesurée sont inclus dans un tore To obtenu par la révolution d'un cercle de diamètre O'F autour du centre O' de la trajectoire T. Si on désigne par $\rho'$, $\theta$ et $\varphi$ les coordonnées sphériques du point C' à partir du centre O', avec $\overrightarrow{O'C} = \rho'\vec{n}$, et si $\overrightarrow{OO'} = zF\,\vec{k}$, il est possible d'exprimer la relation entre $\rho'$ et par la formule :

$$\rho' = \rho - zF.\cos\theta. \qquad (9)$$

Le principe adopté dans le brevet mentionné en premier (la différence par rapport au premier brevet est que O et O' sont distincts) (interpolation d'ordre zéro) consiste à associer à un point C' de la zone d'ombre la valeur mesurée sur un point d'une paire (C-ou C+) à la limite de la zone d'ombre, de même rayon $\rho'$ et de même longitude $\varphi$ ; les colatitudes de ces deux points sont +$\theta$i et -$\theta$i. On choisit le point dont la colatitude est la plus proche de $\theta$, ici C+.

Il suffit alors d'assimiler la valeur R'f ($\rho'$, $\theta$, $\varphi$ ) du point C' défini par ses coordonnées $\rho'$, $\theta$ et $\varphi$ à partir de l'origine O' à la valeur mesurée R'f ( $\rho$i, $\theta$i, $\rho$i) où :

$$\rho i = \rho' + zF\left(1 - \frac{\rho'^2}{OF'^2}\right)^{1/2} \qquad (10)$$

$$\theta i = \pm \arcsin\left(\frac{|\rho'|}{OF'}\right)$$

selon que C+ ou C- est choisi, et

$$\rho i = \rho$$

Tous ces calculs ne sont cependant accomplis avec succès que si les paramètres géométriques sont connus à l'avance avec une précision suffisante pour décrire correctement le système d'acquisition des mesures.

Certains paramètres, à savoir les coordonnées du point Gd sur le plan de détecteurs Pm, la distance focale FGd et les distances d'échantillonnage séparant les points d'acquisition sur le détecteur peuvent être évalués en disposant une grille ou un dessin analogue devant le plan des détecteurs, et à l'illuminer par une source plane qui peut être un petit réservoir rempli de liquide radioactif afin de recueillir l'image de la grille sur le plan des détecteurs. La grille est intégrée à un mécanisme qui permet de la placer parallèlement au plan des détecteurs et à plusieurs distances. L'image se dilate et se contracte donc sur le plan des détecteurs Pm suivant qu'on en approche ou qu'on en éloigne la grille. Le point Gd est le centre des dilatations et des contractions, le grossissement peut être évalué en fonction des distances de la grille au plan des détecteurs Pm et à la source et de la taille de l'image de la grille.

Un dispositif de ce genre est décrit dans l'article de Chang, intitulé "New Methods of Examining Gamma Camera Collimators" et paru en 1988 dans "The Journal of Nuclear Medicine", vol.29, n°5, p.676 à 683.

On peut remplacer la source lumineuse unique et la grille par un réseau de sources aux noeuds d'une grille virtuelle. La plaque qui porte les sources est placée à des distances variables des détecteurs 6 par un jeu d'entretoises.

Les angles $\psi$, $\xi$ et $\delta$ et la distance FG peuvent être obtenus par une série d'expériences, en partie décrites dans un article publié ("Estimation of geometrical parameters and collimator evaluation for con-beam tomography", par Gullberg, Tsui, Crawford, Ballard et Hagius, paru en 1990 dans Medical Physics, n°1712), selon lesquelles on dispose au moins une source de rayonnement fixe et ponctuelle et on fait tourner le réseau de détecteurs pour obtenir une série d'images de la source. La comparaison de ces images en liaison avec les endroits d'où elles ont été prises permet de déterminer les trois angles et d'en déduire certaines indications sur la qualité de collimation. Un algorithme de minimisation des incertitudes ou des erreurs selon une méthode des moindres carrés peut être utilisé.

Enfin, si on utilise plusieurs détecteurs, l'écart entre les détecteurs est donné par la différence entre les angles de précession $\psi$ évalués selon la méthode précédente pour une même position des sources ponctuelles.

L'invention peut être appliquée très commodément à des cas où le point focal F et la caméra 4 sont mus sur des trajectoires circulaires, mais elle peut aussi être appliquée à des systèmes à plusieurs trajectoires d'acquisition comme dans les deux brevets français cités. Enfin, on peut l'utiliser non seulement dans les algorithmes utilisant la transformée de Radon de la fonction qui sert à la reconstruction de l'image ou la dérivée première de cette transformée, mais encore dans les algorithmes qui comportent une transformée de Hilbert de la transformée de Radon ou de sa dérivée première.

## Revendications

1. Procédé de reconstruction d'images tridimensionnelles d'un objet (3) défini par des valeurs prises par une fonction (f) sur des points (M) de l'objet, la fonction étant une propriété d'un rayonnement conique ayant un point focal (F) et passant à travers l'objet (3) ; dans lequel la fonction (f) est calculée en utilisant des sommes de la fonction (f) sur des plans (P) passant par l'objet (3) et paramétrés par des coordonnées ($\rho$, $\theta$, $\varphi$) définies dans un repère d'objet (O, $\vec{i}, \vec{j}, \vec{k}$) comprenant une origine (O) ;

   - le procédé comprenant :

      - un déplacement sur une trajectoire autour de l'objet (3) et d'un axe de rotation (5) d'un réseau bidimensionnel (4) de détecteurs (6) orientés vers le point focal (F) ; le point focal (F) étant déplacé avec le réseau (4) et se projetant orthogonalement par un axe focal sur un point fixe (Gd) du réseau ;

         - des mesures de la fonction (f) par les détecteurs (6) à au moins une série de positions d'acquisition, associées à des angles de précession ($\psi$) autour de l'objet (3) du réseau (4) et du point focal (F) ;
         - des calculs de détermination associant aux plans (P) des angles de précession ($\psi$) du réseau (4) par des formules faisant intervenir les coordonnées ($\rho$, $\theta$, $\varphi$) ;
         - des calculs des sommes des mesures sur les plans (P) ;
         - des calculs sur les sommes par un algorithme d'inversion pour obtenir les valeurs prises par la fonction (f) sur les points (M) de l'objet ;

      caractérisé en ce que :

- l'axe focal passe à l'écart de l'origine (O) du repère d'objet ;
- les formules des calculs de détermination font intervenir au moins un angle (ξ) entre l'axe focal et l'axe de rotation et un écart (pG, qG, FG) entre le point focal (F) et l'origine (O) du repère d'objet, cet écart étant mesuré dans des directions ($\vec{u}$, $\vec{v}$, $\vec{w}$) d'un repère d'acquisition lié au réseau (4) et dont une des directions correspond à l'axe focal.

2. Procédé suivant la revendication 1, caractérisé en ce que les calculs de détermination font intervenir un angle (δ) entre des rangées de détecteurs (6) du réseau (4) et un plan perpendiculaire à l'axe de rotation (5).

3. Procédé suivant l'une quelconque des revendications 1 ou 2, caractérisé en ce que les formules comprennent au moins l'une des formules (7) et (8), la trajectoire étant circulaire.

4. Procédé suivant l'une quelconque des revendications 1 à 3, caractérisé en ce qu'il comprend une transformée de Hilbert.

5. Procédé suivant l'une quelconque des revendications 1 à 4, caractérisé en ce que l'objet est la tête d'un patient (1) et l'axe de rotation (5) est un axe établi dans le sens de la hauteur du patient, et l'angle (ξ) entre l'axe focal et l'axe de rotation est choisi librement.

6. Procédé suivant la revendication 5, caractérisé en ce que l'angle (ξ) entre l'axe focal et l'axe de rotation est avantagement de 90°.

7. Procédé suivant l'une quelconque des revendications 1 à 6, caractérisé en ce qu'il comprend une étape de complément d'un ensemble de grandeurs composé des sommes, ou de grandeurs obtenues de ces sommes, des mesures sur les plans (P) par des valeurs paramétrées par des coordonnées (ρ, θ, φ) de même nature que les coordonnées des plans (P) et résultant d'interpolation des grandeurs de l'ensemble en fonction desdites coordonnées.

## Patentansprüche

1. Verfahren zur 3D-Bilderzeugung eines Objekts (3), definiert durch Werte, die durch eine Funktion (f) an Punkten (M) des Objekts genommen wurden, wobei die Funktion eine Eigenschaft einer konischen Strahlung ist, die einen Brennpunkt (F) hat und das Objekt (3) durchquert; bei dem die Funktion (f) berechnet wird, indem Summen der Funktion (f) in durch das Objekt (3) verlaufenden Ebenen (P) benutzt und parametriert werden mittels Koordinaten (ρ, θ, φ), definiert in einem Objektbezugssystem (O, $\vec{i}$, $\vec{j}$, $\vec{k}$), das einen Nullpunkt (O) hat; wobei dieses Verfahren umfaßt:

- eine Bewegung eines zweidimensionalen Gitters (4) aus auf den Brennpunkt (F) gerichteten Detektoren (6) auf einer Bahn um das Objekt (3) und eine Rotationsachse (5) herum , wobei der Brennpunkt (F) mit dem Gitter (4) bewegt wird. und sich mit einer Brennachse rechtwinklig auf einen festen Punkt (Gd) des Gitter projiziert;
- Messungen der Funktion (f) durch die Detektoren (6) an wenigstens einer Serie von Erfassungspositionen, Präzessionswinkeln (ψ) des Gitters (4) und des Brennpunkts (F) um das Objekt (3) herum zugeordnet;
- Bestimmungsberechnungen, die den Ebenen (P) Präzessionswinkel (ψ) des Gitters (4) durch Formeln zuordnen, die Koordinaten (ρ, θ,φ) benutzen;
- Berechnungen der Summen der Messungen in den Ebenen (P) ;
- Berechnungen an den Summen durch einen Inversionsalgorithmus, um die von der Funktion (f) an den Punkten (M) des Objekts genommenen Werte zu erhalten;

**dadurch gekennzeichnet:**

- daß die Brennachse von dem Nullpunkt (O) des Objektbezugssystems beabstandet ist;
- daß die Formeln der Bestimmungsberechnung wenigstens einen Winkel (ξ) zwischen der Brennachse und der Rotationsachse und einen Abstand (pG, qG, FG) zwischen dem Brennpunkt (F) und dem Nullpunkt (O) des Objektbezugssystems benutzen, wobei dieser Abstand in Richtungen ($\vec{u}$,$\vec{v}$,$\vec{w}$) eines Erfassungsbezugssystems gemessen wird, das mit dem Gitter (4) verbunden ist und von dem eine seiner Richtungen mit der Brennachse übereinstimmt bzw. zusammenfällt.

**EP 0 573 364 B1**

2. Verfahren nach Anspruch 1, dadurch gekennzeichnet, daß die Bestimmungsberechnungen zwischen Reihen von Detektoren (6) des Gitters (4) und einer zur Rotationsachse (5) senkrechten Ebene einen Winkel ($\delta$) benutzen.

3. Verfahren nach einem der Ansprüche 1 oder 2, dadurch gekennzeichnet, daß die Formeln wenigstens eine der Formeln (7) und (8) umfassen, wobei die Bahn kreisförmig ist.

4. Verfahren nach einem der Ansprüche 1 bis 3, dadurch gekennzeichnet, daß es eine Hilbert-Transformation umfaßt.

5. Verfahren nach einem der Ansprüche 1 bis 4, dadurch gekennzeichnet, daß das Objekt der Kopf eines Patienten (1) ist und die Rotationsachse (5) eine in Richtung Höhe des Patienten vorgesehene Achse ist, und der Winkel ($\xi$) zwischen der Brennachse und der Rotationsachse frei gewählt wird.

6. Verfahren nach Anspruch 5, dadurch gekennzeichnet, daß der Winkel ($\xi$) zwischen der Brennachse und der Rotationsachse vorteilhafterweise 90° beträgt.

7. Verfahren nach einem der Ansprüche 1 bis 6, dadurch gekennzeichnet, daß es einen Ergängzungs- bzw. Komplementschritt einer Menge durch Summen gebildeter Größen oder aus diesen Summen erhaltener Größen der Messungen in den Ebenen (P) durch Werte, parametriert durch Koordinaten ($\rho$, $\theta$, $\varphi$) derselben Art wie die Koordinaten der Ebenen (P) und resultierend aus Interpolationen der Größen der Menge in Abhängingkeit von den genannten Koordinaten umfaßt.


**Claims**

1. Process for the reconstruction of three-dimensional images of an object (3) defined by values assumed by a function (f) on points (M) of the object, the function being a property of a conical radiation having a focal point (F) and passing through the object (3), in which the function (f) is calculated using sums of the function (f) on planes (P) passing through the object (3) and parametrized by coordinates ($\rho$, $\theta$, $\varphi$) defined in an object mark (O, $\vec{i}$, $\vec{j}$, $\vec{k}$) having an origin (0);
   the process comprising:

   - a displacement on a trajectory about the object (3) and a rotation axis (5) of a bidimensional array (4) of detectors (6) oriented towards the focal point (F), which is displaced with the array (4) and is orthogonally projected through a focal axis onto a fixed point (Gd) of the array;

     - measurements of the function (f) by detectors (6) at at least one series of acquisition positions, associated with precession angles ($\psi$) about the object (3) of the array (4) and the focal point (F);
     - determination calculations associating with the planes (P) precession angles ($\psi$) of the array (4) by formulas making use of the coordinates ($\rho$, $\theta$, $\varphi$);
     - calculations of the sums of the measurements on planes (P);
     - calculations on the sums by an inversion algorithm for obtaining the values assumed by the function (f) on the object points (M);

   characterized in that:

     - the focal axis passes to the side of the origin (O) of the object mark;
     - the determination calculation formulas use at least one angle ($\xi$) between the focal axis and the rotation axis and a displacement (pG, qG, FG) between the focal point (F) and the origin (O) of the object mark, said displacement being measured in directions ($\vec{u}$, $\vec{v}$, $\vec{w}$) of an acquisition mark linked with the array (4) and whereof one of the directions corresponds to the focal axis.

2. Process according to claim 1, characterized in that the determination calculations use an angle ($\xi$) between rows of detectors (6) of the array (4) and a plane perpendicular to the rotation axis (5).

3. Process according to either of the claims 1 or 2, characterized in that the formulas incorporate at least one of the formulas (7) and (8), the trajectory being circular.

4. Process according to one of the claims 1 to 3, characterized in that it comprises a Hilbert transform.

5. Process according to any one of the claims 1 to 4, characterized in that the object is the head of a patient (1) and the rotation axis (5) is an axis established in the height direction of the patient and the angle ($\xi$) between the focal axis and the rotation axis is freely chosen.

6. Process according to claim 5, characterized in that the angle ($\xi$) between the focal axis and the rotation axis is advantageously 90°.

7. Process according to any one of the claims 1 to 6, characterized in that it comprises a compliment stage of a group of quantities consisting of sums, or quantities obtained from said sums, measurements on planes (P) by values parametrized by the coordinates ($\rho$, $\theta$, $\varphi$) of the same nature as the coordinates of the planes (P) and resulting from the interpolation of the quantities of the group as a function of said coordinates.

FIG. 1

FIG. 2

FIG. 3

FIG. 4

FIG. 5

FIG. 6

EP 0 573 364 B1

FIG. 7